# DEMANDE DE BREVET EUROPEEN

(11) **EP 1 598 928 A1**
(43) Date de publication de la demande: **23.11.2005**
(21) Numéro de dépôt: 05018342.5
(22) Date de dépôt: 17.12.2003
(51) Int. Cl.: H02P 1/44

(54) **Dispositif de commande de l'alimentation d'un moteur asynchrone**

(30) Priorité: 20.12.2002 FR 0216380
(62) Demande divisionnaire de: 03777112.8
(71) Demandeur: Somfy SAS, 74300 Cluses (FR)
(72) Inventeur: Grehant, Bernard, 74300 Annecy (FR); Bruno, Serge, 74460 Marnaz (FR)
(74) Mandataire: Bugnion Genève

(57) **Abrégé**

Le dispositif est raccordé à une source électrique de courant alternatif (AC/H, AC/N) et comprend un moteur (MOT) électrique monophasé à induction à deux enroulements (W1, W2), un condensateur de déphasage (CM) mis en série avec l'un ou l'autre des enroulements et une unité logique de traitement (ULT). Il est caractérisé en ce que l'unité logique de traitement (ULT) est alimentée par la sortie d'un convertisseur (ALIM) dont les bornes d'entrée sont raccordées au condensateur de déphasage (CM) lorsque le moteur est alimenté.

## Description

L'invention concerne un dispositif selon le préambule de la revendication 1.

Selon le sens de rotation du moteur souhaité, le condensateur de déphasage est placé en série soit avec le premier enroulement, soit avec le second, et l'ensemble est alimenté par le secteur alternatif, entre le fil de phase et le fil de neutre.

Il est connu que l'amplitude de la tension aux bornes du condensateur de déphasage permet de recueillir une information sur la valeur du couple du moteur.

De la demande internationale WO 01/73913, on connaît un dispositif de détection de butée ou d'obstacle comparant l'image décalée de cette tension à une tension de référence fixe pour permettre l'arrêt de l'alimentation du moteur au-delà d'une valeur donnée de couple. Cependant, cette mesure analogique nécessite de choisir les composants du dispositif en fonction de la puissance de moteur. Dans le cas d'une gamme étendue de puissance de moteur, il faut prévoir des cartes électroniques de commande pour chaque moteur de puissance différente. D'autre part, ce montage conduit à dissiper une puissance non négligeable dans des composants passifs.

Par ailleurs, on connaît, de la demande de brevet FR 2 771 865, un dispositif d'alimentation à découpage dit synchrone, utilisant un interrupteur commandé, dont la fréquence de découpage est égale ou double de la fréquence du secteur alimentant une carte électronique de commande d'un tel moteur. Ce dispositif d'alimentation ne permet pas de mesurer le couple délivré par le moteur.

On connaît également du brevet FR 2 685 829, un dispositif d'arrêt d'un moteur asynchrone monophasé à condensateur de déphasage. Ce dispositif est alimenté par le condensateur de déphasage du moteur. Il permet de couper le circuit d'alimentation du moteur lorsqu'un couple trop important est appliqué au moteur. Ce dispositif n'est pas alimenté lorsque le moteur n'est pas sous tension.

Le but de l'invention est de réaliser un dispositif de commande de l'alimentation d'un moteur asynchrone améliorant les dispositifs connus de l'art antérieur et apportant des solutions aux problèmes cités. En particulier, l'invention propose un dispositif de commande de l'alimentation d'un moteur électrique asynchrone, alimenté en permanence et évitant des dissipations d'énergie dans des composants passifs.

Le dispositif selon l'invention est caractérisé par la partie caractérisante de la revendication 1.

Différents modes de réalisation du dispositif selon l'invention sont définis par les revendications dépendantes 2 à 8.

Le dessin annexé représente, à titre d'exemples, deux modes de réalisation du dispositif de commande selon l'invention.

La figure 1 est un schéma d'un premier mode de réalisation du dispositif de commande selon l'invention.

La figure 2 est un schéma d'un deuxième mode de réalisation du dispositif de commande selon l'invention.

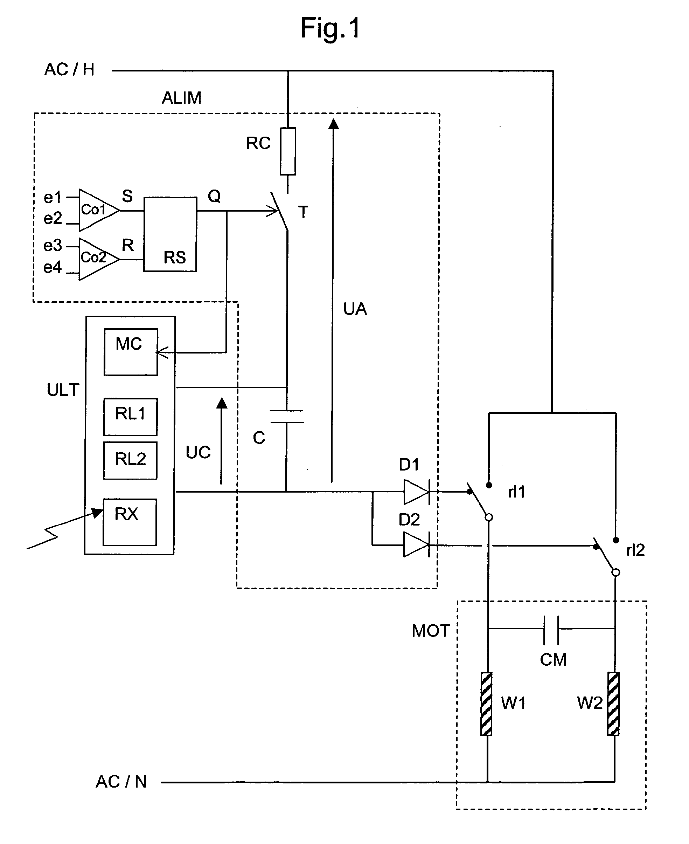

Le dispositif de commande d'un moteur électrique asynchrone MOT représenté à la figure 1 comprend principalement une unité logique de traitement ULT permettant la commande de deux contacts de relais rl1 et rl2 et un convertisseur ALIM de cette unité comprenant un interrupteur commandé T. Ces relais sont par exemple activés en fonction d'ordres reçus par un récepteur RX de signaux radioélectriques compris dans l'unité logique de traitement ULT.

Le moteur MOT est alimenté par les contacts rl1 et rl2 des deux relais dont les bobines sont alimentées par l'unité logique de traitement ULT. Ainsi, le contact rl1 permet de relier l'enroulement W1 du moteur directement à la phase AC/H et l'enroulement W2 à la phase via un condensateur de déphasage CM pour faire tourner le moteur dans un premier sens, et le contact rl2 permet de relier l'enroulement W2 du moteur directement à la phase AC/H et l'enroulement W1 à la phase via le condensateur CM pour faire tourner le moteur dans un deuxième sens. Les contacts sont ici représentés dans leur position de repos : le moteur n'est pas alimenté en direct sur le secteur et il est donc arrêté.

Le convertisseur ALIM présente entre ses bornes de sortie, un condensateur C dont la charge est commandée par l'interrupteur commandé T à travers les enroulements du moteur, des circuits de redressement D1 et D2 et, éventuellement à travers une résistance RC de limitation de courant, lorsque le moteur n'est pas alimenté. L'unité logique de traitement est donc alimentée par le secteur par l'intermédiaire de l'interrupteur commandé T. De préférence, l'interrupteur est fermé uniquement dans des plages où la tension sinusoïdale redressée est faible.

Lorsque le moteur n'est pas alimenté, l'unité logique de traitement pourrait également être alimentée par tout autre moyen.

Lorsque le moteur est alimenté, la charge du condensateur C est réalisée par la tension régnant aux bornes du condensateur de déphasage CM. Cette charge est commandée par l'interrupteur commandé T à travers les circuits de redressement D1 et D2 et, éventuellement à travers une résistance RC de limitation de courant.

La tension aux bornes du condensateur de sortie C fluctue donc au cours du temps. Le condensateur C se charge pendant les phases de fermeture de l'interrupteur T et se décharge, en alimentant l'unité logique de traitement ULT, pendant les phases d'ouverture de l'interrupteur T. Cette plage de fluctuation est limitée et acceptable pour l'unité logique de traitement qui dispose généralement d'un régulateur de tension.

Le convertisseur ALIM alimente, par le biais de l'interrupteur commandé T, constitué par exemple par un transistor MOS, le condensateur de sortie C de manière périodique selon l'un des procédés connus de l'état de la technique. Les moyens de commande de l'interrupteur sont symbolisés par une bascule bistable RS pilotée par deux circuits Co1, Co2 comparateurs de tension. Ces fonctions peuvent être réalisées de manière équivalente ou approchée par des composants discrets. Ainsi, de manière préférée, l'entrée S de la bascule RS est active quand la tension UA entre la phase et la borne du condensateur C reliée aux dispositifs de redressement D1 et D2 devient inférieure à un seuil donné et provoque, par conséquent, l'activation de la sortie Q de la bascule. L'activation de la sortie Q provoque la fermeture de l'interrupteur commandé T.

Inversement, l'entrée R de la bascule devient active quand la tension aux bornes du condensateur C devient supérieure à un seuil donné et provoque le passage à l'état bas de la sortie Q et, par conséquent, l'ouverture de l'interrupteur commandé T.

Les entrées e1 et e2 du premier comparateur Co1 déterminant l'état de l'entrée S de la bascule RS sont reliées par exemple à une tension de référence fixe et à une tension image de la tension UA obtenue par exemple grâce à un diviseur potentiométrique.

Les entrées e3 et e4 du deuxième comparateur Co2 déterminant l'état de l'entrée R de la bascule RS sont reliées par exemple à une tension de référence fixe et à une tension image de la tension aux bornes du condensateur C.

Lorsque le moteur n'est pas alimenté, un courant de très faible valeur efficace passe en fait dans les enroulements W1 et W2. Ce courant est provoqué par la conduction périodique de l'interrupteur T commandé à la fréquence du secteur ou à deux fois cette fréquence (typiquement 50, 60, 100, 120 Hz). Ce courant suffit à charger le condensateur C de manière à recueillir à ses bornes une tension UC unidirectionnelle suffisante pour alimenter l'unité logique de traitement ULT.

Non seulement le courant dans les enroulements W1 et W2 est beaucoup plus faible que le courant nominal du moteur, mais encore les deux enroulements sont alimentés en phase, ce qui exclut toute possibilité de rotation du moteur.

Notons que la résistance des enroulements W1 et W2 sert également avantageusement à limiter le courant traversant le condensateur C, ce qui peut éviter d'utiliser une résistance RC assurant spécifiquement cette fonction. La puissance dissipée par ce courant traversant les enroulements du moteur est de l'ordre du watt ou de quelques watts, ce qui est insignifiant pour le moteur.

L'unité logique de traitement ULT est alimentée par la tension UC aux bornes du condensateur C. Elle comprend un microcontrôleur MC dont une entrée reçoit le signal de commande de l'interrupteur T, issu de la sortie Q de la bascule RS. Cette entrée est typiquement celle d'un circuit permettant de mesurer le temps. Ainsi, on peut mesurer avec précision la durée de conduction de l'interrupteur T lors de chaque période. Si l'unité logique de traitement ULT absorbe un courant sensiblement constant, alors la durée de fermeture de l'interrupteur T ne dépend que de l'amplitude de la tension UA, amplitude qui détermine notamment la pente de la sinusoïde UA au voisinage de ses passages à zéro. Plus l'amplitude de UA est grande, moins il faudra de temps pour recharger le condensateur C d'une quantité donnée. Quand un des deux relais est activé, la tension UA devient égale à la tension aux bornes du condensateur CM, redressée. On obtient de cette manière la valeur du couple moteur. La durée de conduction de l'interrupteur T, mesurée par le microcontrôleur MC, est donc directement liée à l'amplitude de la tension aux bornes du condensateur CM dépendant du couple moteur.

Le montage proposé permet donc non seulement d'alimenter l'unité logique de traitement ULT, lorsque le moteur n'est pas alimenté, mais encore d'alimenter l'unité logique de traitement ULT grâce au condensateur de déphasage CM et le montage proposé permet enfin d'obtenir une mesure du couple moteur ou d'une grandeur image de ce couple lorsque le moteur est alimenté.

Les dispositifs de redressement D1 et D2 peuvent consister en des diodes effectuant un redressement simple alternance ou en des circuits tels que des ponts de diodes effectuant un redressement double alternance. Il faut noter que la disposition des deux dispositifs de redressement évite que le condensateur CM soit brutalement mis en court-circuit quand les deux relais sont en position de repos.

Ce premier mode de réalisation de dispositif de commande d'alimentation est particulièrement précis et économique.

Ce mode de réalisation peut donner lieu à de nombreuses variantes utilisant d'autres convertisseurs que celui qui vient d'être décrit, l'important étant de permettre à la fois d'alimenter l'unité logique de traitement et de connaître indirectement la valeur de la tension aux bornes du condensateur CM.

Il existe en effet de nombreuses variantes d'alimentations de type synchrone. Mais, on peut aussi utiliser une alimentation à découpage plus conventionnelle pour réaliser le convertisseur.

Dans ce cas, la grandeur permettant la mesure indirecte de la tension d'entrée du convertisseur ALIM devient le rapport cyclique du signal de commande de l'interrupteur commandé, celui-ci étant cette fois piloté à une fréquence élevée, et non à une fréquence égale ou double de celle du secteur. Cette mesure indirecte de la tension peut de nouveau être réalisée par la mesure du temps de conduction de l'interrupteur commandé, ou par toute autre mesure connue de rapport cyclique.

En effet, pour une variation donnée de la tension aux bornes du condensateur de sortie du convertisseur, le temps de conduction de l'interrupteur commandé dépend directement de la tension aux bornes du condensateur de déphasage quand c'est celui-ci qui alimente le convertisseur. Par exemple, si l'ouverture de l'interrupteur commandé est provoquée par un dépassement d'un seuil donné de la tension aux bornes du condensateur de sortie du convertisseur, cette ouverture se produit d'autant plus tard que l'amplitude de la tension aux bornes du condensateur de déphasage est faible. Ainsi, la mesure du temps de conduction de l'interrupteur commandé permet donc la mesure de l'amplitude de la tension aux bornes du condensateur de déphasage, donc celle du couple du moteur.

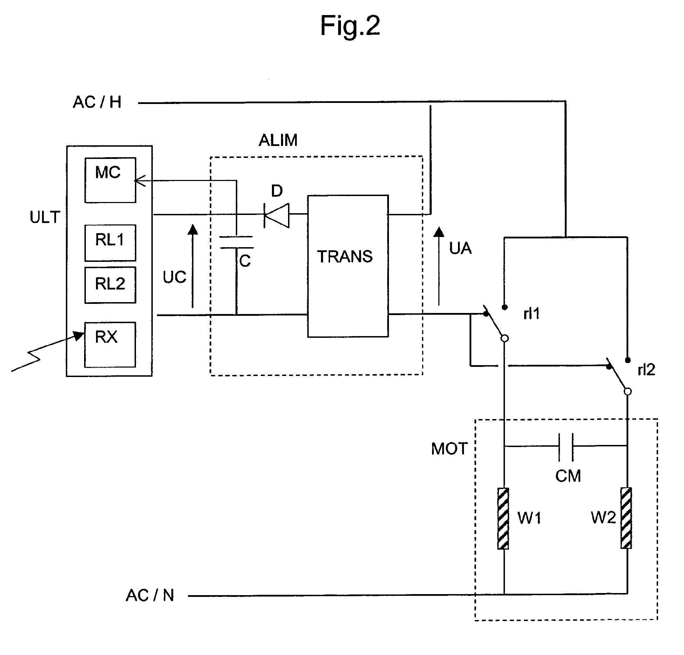

Un deuxième mode de réalisation de dispositif de commande d'alimentation, représenté à la figure 2, utilise la même structure générale que le premier mode de réalisation. Cependant, le contenu du convertisseur (ALIM) a été modifié. Celui-ci comprend un transformateur TRANS et un dispositif de redressement D, bien connus de l'homme du métier. Dans ce cas, le dispositif de redressement est placé entre le secondaire du transformateur et le condensateur de sortie C. Les dispositifs de redressement D1 et D2 du mode de réalisation précédent sont remplacées par des fils (ou par des résistances de faible valeur permettant d'éviter tout court-circuit brutal de CM). Les bornes d'entrée du convertisseur ALIM sont raccordées au primaire du transformateur TRANS. Cette fois, c'est directement la tension aux bornes du condensateur C, ou son image à l'aide d'un diviseur potentiométrique, qui est appliquée à l'entrée du microcontrôleur (MC) pour effectuer une mesure d'amplitude de celle-ci grâce à un convertisseur analogique-digital intégré. On obtient alors la valeur maximale de la tension aux bornes du condensateur C. Celle-ci est directement liée à la tension aux bornes du condensateur de déphasage CM. On obtient ainsi par analyse de la valeur maximale de la tension aux bornes du condensateur C, la valeur du couple moteur.

Dans ce deuxième mode de réalisation, le bobinage primaire du transformateur TRANS est alimenté, entre la phase et le neutre du secteur, en série avec les deux bobinages du moteur montés en parallèle, lorsque le moteur n'est pas alimenté et est alimenté directement par le condensateur de déphasage CM, lorsque le moteur est alimenté.

Il est de plus possible de prélever, grâce à un dispositif de mesure, une image de la tension secteur (entre le fil de phase AC/H et le fil neutre AC/N) de manière à détecter d'éventuelles variations de cette tension et à corriger ainsi la mesure de la tension UCM, afin de ne pas les interpréter comme des variations de couple. Ces perfectionnements relatifs à la mesure de la tension aux bornes du condensateur de déphasage CM (ou à la mesure d'autres paramètres du moteur modifiés par la tension du secteur) sont connus de l'état de la technique.

L'unité logique de traitement peut également gérer des signaux provenant de capteurs.

Les deux modes de réalisation décrivent l'usage de relais permettant la commutation des enroulements du moteur et du condensateur de déphasage. Des dispositifs de commutation à semi-conducteurs peuvent également être utilisés.

La source d'énergie alimentant le moteur est normalement le secteur alternatif, mais il peut s'agir de toute source de courant alternatif, comme présentée par la sortie d'un montage onduleur ou d'un alternateur isolé.

Bien entendu, le convertisseur ALIM est aussi utilisable pour alimenter un récepteur d'ordres, par exemple sans fil et de type radio ou infra-rouge.

## Revendications

1. Dispositif raccordé à une source électrique de courant alternatif (AC/H, AC/N), comprenant un moteur (MOT) électrique monophasé à induction à deux enroulements (W1, W2), un condensateur de déphasage (CM) mis en série avec l'un ou l'autre des enroulements et une unité logique de traitement (ULT), **caractérisé en ce que** l'unité logique de traitement (ULT) est alimentée par la sortie d'un convertisseur (ALIM) dont les bornes d'entrée sont raccordées au condensateur de déphasage (CM) lorsque le moteur est alimenté et **en ce que** le convertisseur (ALIM) comprend un interrupteur commandé (T) piloté par la sortie (Q) d'un montage équivalent à une bascule bistable (RS) dont les entrées (S, R) sont activées par comparaison de la tension d'alimentation du convertisseur et/ou de la tension de sortie du convertisseur (UC) à des tensions seuils.

2. Dispositif selon la revendication 1, **caractérisé en ce qu'**il permet la commande de l'alimentation du moteur électrique (MOT) à partir d'une source électrique de courant alternatif (AC/H, AC/N).

3. Dispositif selon la revendication 1 ou 2, **caractérisé en ce que** le convertisseur (ALIM) présente un condensateur (C) entre ses bornes de sortie.

4. Dispositif selon la revendication 1, 2 ou 3, **caractérisé en ce qu'**il présente des moyens (MC) de mesure indirecte de l'amplitude de la tension aux bornes du condensateur de déphasage (CM) lorsque le moteur (MOT) est alimenté.

5. Dispositif selon la revendication 4, **caractérisé en ce que** les moyens (MC) de mesure indirecte de l'amplitude de la tension aux bornes du condensateur de déphasage (CM) utilisent une mesure réalisée sur un élément du convertisseur (ALIM) pour déterminer la tension aux bornes du condensateur de déphasage (CM).

6. Dispositif selon la revendication 4 ou 5, **caractérisé en ce que** les moyens de mesure indirecte de l'amplitude de la tension aux bornes du condensateur de déphasage (CM) comprennent des moyens de mesure du temps d'ouverture ou de fermeture de l'interrupteur commandé (T) ou des moyens de mesure du rapport cyclique des états ouvert et fermé de l'interrupteur commandé (T).

7. Dispositif selon la revendication 6, **caractérisé en ce que** les moyens de mesure du temps d'ouverture ou de fermeture de l'interrupteur commandé (T) ou les moyens de mesure du rapport cyclique des états ouvert et fermé de l'interrupteur commandé (T) comprennent un microcontrôleur (MC) dont une entrée reçoit le signal de commande de l'interrupteur commandé (T).

8. Dispositif selon l'une des revendications 3 à 7, **caractérisé en ce que** le convertisseur (ALIM) présente, entre ses bornes d'entrée, l'interrupteur commandé (T) monté en série avec le condensateur de sortie (C) du convertisseur (ALIM) et avec un dispositif de redressement (D1, D2).
